Europäisches Patentamt

European Patent Office

Office européen des brevets

(11) EP 0 604 668 B1

(19)

(12) **EUROPÄISCHE PATENTSCHRIFT**

(45) Veröffentlichungstag und Bekanntmachung des Hinweises auf die Patenterteilung:
**18.02.1998 Patentblatt 1998/08**

(51) Int Cl.6: **H04L 12/40**, H04L 12/42

(21) Anmeldenummer: **92114756.7**

(22) Anmeldetag: **28.08.1992**

(54) **Logischer Ring mit Umlaufzeitüberwachung**

Logical ring with monitoring of rotation time

Boucle logique avec surveillance du temps de rotation

(84) Benannte Vertragsstaaten:
**AT CH DE FR GB IT LI**

(43) Veröffentlichungstag der Anmeldung:
**06.07.1994 Patentblatt 1994/27**

(73) Patentinhaber: **SIEMENS AKTIENGESELLSCHAFT**
**80333 München (DE)**

(72) Erfinder:
• **Eberl, Gerhard, Dipl.-Infor.**
  **W-8458 Sulzbach-Rosenberg (DE)**

• **Spichtinger, Klaus, Dipl.-Ing.**
  **W-8471 Stulln (DE)**
• **Tretter, Bertram, Dipl.-Ing. (FH)**
  **W-8415 Nittenau (DE)**
• **Weigmann, Josef**
  **W-8601 Lauter (DE)**

(56) Entgegenhaltungen:
EP-A- 0 139 916          EP-A- 0 306 963
DE-A- 4 032 725

• **EFOC/LAN 87 Juni 1987, BASEL, CH Seiten 229 - 236 D. DYKEMAN ET AL. 'An Investigation of the FDDI Media-Access Control Protocol'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Kommunikationsverfahren für ein aus mehreren an eine Kommunikationsleitung angeschlossenen Teilnehmern bestehendes Kommunikationssystem,

- wobei die Teilnehmer zyklisch aktiviert werden,
- wobei zu einem beliebigen Zeitpunkt stets nur ein Teilnehmer aktiviert ist,
- wobei der momentan aktivierte Teilnehmer zur Aktivierung des nächsten zu aktivierenden Teilnehmers diesem ein Aktivierungssignal übermittelt und sich selbst nach dem Quittieren des Aktivierungssignals durch den zu aktivierenden Teilnehmer deaktiviert,
- wobei in den Teilnehmern eine Sollzykluszeit abgespeichert ist, binnen derer die Teilnehmer mindestens einmal aktiviert werden sollen,
- wobei die Teilnehmer den Zeitpunkt ihrer letzten Aktivierung und den Zeitpunkt ihrer neuerlichen Aktivierung erfassen und aus der Differenz dieser Zeitpunkte eine Istzykluszeit ermitteln,
- wobei die Teilnehmer aus der Differenz von Sollzykluszeit und Istzykluszeit eine maximal zulässige Aktivierungszeit ermitteln.

Ein derartiges Verfahren wird beispielsweise bei einem Token Ring verwendet. Dort wird den Teilnehmern die Sollzykluszeit vom Anwender vorgegeben. Wenn ein Teilnehmer den sogenannten Token erhält, so prüft er, wieviel Zeit seit der letzten Übernahme des Tokens verstrichen ist und vergleicht diese Zeit mit der Sollzykluszeit. Wenn die Sollzykluszeit größer als die Istzykluszeit ist, sendet der Teilnehmer die bei ihm anstehenden Nachrichten, ansonsten gibt er den Token unverzüglich weiter.

Aus der EP-A-0 306 963 ist ein Kommunikationsverfahren bekannt, bei dem in den an eine Kommunikationsleitung angeschlossenen Teilnehmern eine Sollzykluszeit abgespeichert ist, wobei anhand einer gemessenen Istzykluszeit eine Zeit ermittelt wird, die für das Versenden der eigenen Nachricht des jeweiligen Teilnehmers verbleibt. Ist die Istzykluszeit größer als die Sollzykluszeit, kann der jeweils im Besitz des Tokens befindliche Teilnehmer seine aktuelle Nachricht nicht senden.

Bei ungünstiger Vorgabe der Sollzykluszeit kann es daher geschehen, daß manche Teilnehmer nur sehr selten ihre Nachrichten senden können. Andererseits ist bei Vorgabe einer zu großen Sollzykluszeit eine schnelle Reaktion auf Ereignisse nicht gewährleistet. Bisher waren keine Verfahren zur Optimierung der Sollzykluszeit bekannt.

Die Aufgabe der vorliegenden Erfindung besteht folglich darin, ein Verfahren zu schaffen, bei dem die Optimierung der Sollzykluszeit leicht möglich und sogar automatisierbar ist.

Die Aufgabe wird dadurch gelöst, daß aus der maximal zulässigen Aktivierungszeit ein Korrekturwert für die Sollzykluszeit ermittelt wird. Wenn die maximal zulässige Aktivierungszeit nämlich sehr groß bzw. sehr klein ist, ist dies ein starkes Indiz dafür, daß auch die Sollzykluszeit zu groß bzw. zu klein ist.

Um die Sicherheit der Korrektur zu erhöhen und um die Auswirkungen kurzfristiger Schwankungen zu reduzieren, ist es von Vorteil, wenn zur Ermittlung des Korrekturwertes aus den maximal zulässigen Aktivierungszeiten mehrerer Zyklen Mittelwerte gebildet wird.

Weitere Vorteile und Einzelheiten ergeben sich aus der nachfolgenden Beschreibung eines Ausführungsbeispiels, anhand der Zeichnung und in Verbindung mit den weiteren Unteransprüchen. Dabei zeigt:

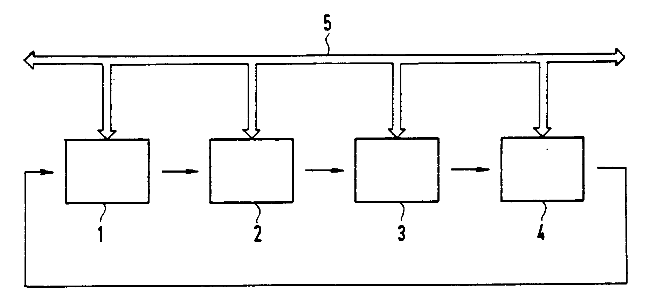

FIG 1 ein Kommunikationssystem

Gemäß FIG 1 besteht das Kommunikationssystem aus Busteilnehmern 1 bis 4, die über den Bus 5 miteinander verbunden sind. Die Busteilnehmer 1 bis 4 sind beispielsweise Automatisierungsgeräte. Von den Busteilnehmern 1 bis 4 ist stets nur einer aktiviert, momentan z.B. der Busteilnehmer 2. "Aktiviert" heißt dabei im Regelfall, daß der aktivierte Busteilnehmer, hier der Busteilnehmer 2, die Rolle des Busmasters innehat. Der Busteilnehmer 2 sendet die bei ihm anstehenden Nachrichten über den Bus 5. Danach sendet er ein Aktivierungssignal an den Busteilnehmer 3. Der Busteilnehmer 3 quittiert dieses Aktivierungssignal, d.h. er übernimmt den Token. Daraufhin deaktiviert sich der Busteilnehmer 2.

Im Regelfall quittiert der Busteilnehmer 3 das Aktivierungssignal dadurch, daß er ein beliebiges Telegramm über den Bus 5 sendet. Allerdings werden auch Busstörungen vom Busteilnehmer 2 als Quittung interpretiert. In diesem Fall ist keiner der Busteilnehmer 1 bis 4 aktiviert. Dann wird nach Ablauf einer Wartezeit in an sich bekannter Art und Weise einer der Busteilnehmer 1 bis 4 aktiviert.

Der Busteilnehmer 3 verfährt in ähnlicher Weise wie der Busteilnehmer 2, sendet also seine Nachrichten, aktiviert sodann den Teilnehmer 4 und deaktiviert sich selbst. Die Aktivierung der Teilnehmer 1 bis 4 erfolgt zyklisch, wie durch die Pfeile in FIG 1 angedeutet ist.

In jedem der Teilnehmer 1 bis 4 ist eine Sollzykluszeit T* abgespeichert. Binnen dieser Sollzykluszeit T* sollten die Teilnehmer 1 bis 4 mindestens einmal aktiviert werden. Die Teilnehmer 1 bis 4 erfassen daher den Zeitpunkt $T_A$' ihrer letzten Aktivierung und den Zeitpunkt $t_A$ ihrer neuerlichen Aktivierung und ermitteln aus der Differenz dieser Zeitpunkte $t_A$', $t_A$ die Istzykluszeit T. Sodann ermittelt sie die Differenz von Sollzykluszeit T* und Istzykluszeit T. Diese Differenz ist die maximal zulässige Aktivierungszeit $T_A$. Wenn die maximal zulässige Aktivierungszeit $T_A$ größer als Null ist oder ein hochpriorer Auftrag ansteht, sendet der jeweilige Busteilnehmer 1 bis 4 seine Nachrichten bzw. einen Teil seiner Nachrichten oder den hochprioren Auftrag über den Bus 5. Ansonsten gibt er den Token sofort weiter.

Das Optimieren der Sollzykluszeit T* kann manuell oder automatisch geschehen. Bei manueller Optimierung wird die maximal zulässige Aktivierungszeit $T_A$ ausgegeben, so daß der Anwender des Kommunikationssystems ersehen kann, ob die Sollzykluszeit T* zu groß oder zu klein ist. Der Anwender kann dann den Teilnehmern einen Korrekturwert für die Sollzykluszeit T* bzw. direkt eine korrigierte neue Sollzykluszeit $T^*_{neu}$ vorgeben.

Anstelle der maximal zulässigen Aktivierungszeit $T_A$ kann selbstverständlich auch von den Teilnehmern die zulässige Aktivivierungszeit $T_A$ über mehrere Zyklen gemittelt werden und nur der Mittelwert $\overline{T_A}$ ausgegeben werden.

Die Optimierung der Sollzykluszeit T* kann auch von den Teilnehmer 1 bis 4 selbst durchgeführt werden. Im Prinzip kann man sich diese Selbstkorrektur in Form einer Zweipunktregelung vorstellen. Dem Teilnehmer wird hierzu eine Unter- und Obergrenze für die maximal zulässige Aktivierungszeit $T_A$ vorgegeben. Solange die (tatsächliche) maximal zulässige Aktivierungszeit $T_A$ zwischen der Unter- und der Obergrenze liegt, erfolgt keine Korrektur der Sollzykluszeit T*. Der Korrekturwert ist also Null. Wenn die maximal zulässige Aktivierungszeit $T_A$ die Untergrenze unterschreitet, ist die Sollzykluszeit T* zu klein, der Korrekturwert wird also größer Null gesetzt. Wenn die maximal zulässige Aktivierungszeit $T_A$ die Obergrenze überschreitet, ist die Sollzykluszeit T* zu groß. Der Korrekturwert wird also kleiner Null gesetzt.

Auch bei der automatischen Optimierung der Sollzykluszeit T* kann anstelle der Aktivierungszeit $T_A$ selbstverständlich auch deren Mittelwert $\overline{T_A}$ verwendet werden.

Um zu verhindern, daß die Sollzykluszeit T* immer größer wird und dadurch eine schnelle Reaktion der an den Bus 5 angeschlossenen Teilnehmer 1 bis 4 nicht mehr gewährleistet ist, wird den Teilnehmern 1 bis 4 eine maximale Sollzykluszeit $T^*_{max}$ vorgegeben. Wenn dann die errechnete, neue Sollzykluszeit $T^*_{neu}$ die maximale Sollzykluszeit $T^*_{max}$ überschreitet, so wird die neue Sollzykluszeit $T^*_{neu}$ auf den Wert der maximalen Sollzykluszeit $T^*_{max}$ begrenzt.

Das obenstehend beschriebene automatisch ablaufende Regelverfahren ermöglicht es, den Teilnehmern zu Beginn gar keine Sollzykluszeit T* bzw. eine willkürlich gewählte Sollzykluszeit T* vorzugeben. Die Anpassung der Sollzykluszeit T* erfolgt in den Teilnehmern 1 bis 4 dann selbsttätig.

## Patentansprüche

1. Kommunikationsverfahren für ein aus mehreren an eine Kommunikationsleitung (5) angeschlossenen Teilnehmern (1-4) bestehendes Kommunikationssystem,

- wobei die Teilnehmer (1-4) zyklisch aktiviert werden,
- wobei zu einem beliebigen Zeitpunkt stets nur ein Teilneh mer (z. B. 2) aktiviert ist,
- wobei der momentan aktivierte Teilnehmer (2) zur Aktivierung des nächsten zu aktivierenden Teilnehmers (3) diesem ein Aktivierungssignal übermittelt und sich selbst nach dem Quittieren des Aktivierungssignals durch den zu aktivierenden Teilnehmer (3) deaktiviert,
- wobei in den Teilnehmern (1-4) eine Sollzykluszeit (T*) abgespeichert ist, binnen derer die Teilnehmer (1-4) mindestens einmal aktiviert werden sollen,
- wobei die Teilnehmer (1-4) den Zeitpunkt ($t_A'$) ihrer letzten Aktivierung erfassen und aus der Differenz dieser Zeitpunkte ($t_A'$, $t_A$) eine Istzykluszeit (T) ermitteln,
- wobei die Teilnehmer (1-4) aus der Differenz von Sollzykluszeit (T*) und Istzykluszeit (T) eine maximal zulässige Aktivierungszeit ($T_A$) ermitteln,

**dadurch gekennzeichnet**,

- daß aus der maximal zulässigen Aktivierungszeit ($T_A$) ein Korrekturwert für die Sollzykluszeit (T*) ermittelt wird,
- daß zur Ermittlung des Korrekturwertes aus den maximal zulässigen Aktivierungszeiten ($T_A$) mehrerer Zyklen ein Mittelwert ($\overline{T}_A$) gebildet wird und
- daß die Teilnehmer (1-4) selbsttätig den Korrekturwert ermitteln und aus der Summe von Korrekturwert und Sollzykluszeit (T*) eine neue Sollzykluszeit ($T^*_{neu}$) ermitteln.

2. Kommunikationsverfahren nach Anspruch 1, **dadurch gekennzeichnet**,

- daß die maximal zulässige Aktivierungszeit ($T_A$) bzw. deren Mittelwert ($\overline{T_A}$) von den Teilnehmern (1-4) ausgegeben wird und
- daß der Korrekturwert bzw. eine neue Sollzykluszeit ($T^*_{neu}$) vom Anwender des Kommunikationssystems vorgegeben wird.

3. Kommunikationsverfahren nach Anspruch 1 oder 2, **dadurch gekennzeichnet**, daß den Teilnehmern (1-4) eine Unter- und eine Obergrenze für die maximal zulässige Aktivierungszeit ($T_A$) bzw. deren Mittelwert ($\overline{T_A}$) vorgegeben wid und daß der Korrekturwert den Wert Null hat, wenn die maximal zulässige Aktivierungszeit ($T_A$) bzw. deren Mittelwert ($\overline{T_A}$) zwischen der Unter- und der Obergrenze liegt.

4. Kommunikationsverfahren nach Anspruch 1, 2 oder 3, **dadurch gekennzeichnet**, daß den Teilnehmern (1-4) eine maximale Sollzykluszeit ($T^*_{max}$) vorgegeben wird und die neue Sollzykluszeit ($T^*_{neu}$) bei einem Überschreiten der maximalen Sollzykluszeit ($T^*_{max}$) auf den Wert der maximalen Sollzykluszeit ($T^*_{max}$) begrenzt wird.

5. Kommunikationsverfahren nach einem der obigen Ansprüche, **dadurch gekennzeichnet**, daß es bei einem Token Ring angewendet wird.

## Claims

1. Communication method for a communication system comprising several subscribers (1-4) connected to a communication line (5),

   - whereby the subscribers (1-4) are cyclically activated,
   - whereby always only one subscriber (for example 2) is activated at any instant,
   - whereby the currently activated subscriber (2), for the activation of the next subscriber (3) to be activated, transmits to the latter an activation signal and deactivates itself after the subscriber (3) to be activated has acknowledged the activation signal,
   - whereby a desired cycle time ($T^*$) is stored in the subscribers (1-4), within which the subscribers (1-4) are to be activated at least once,
   - whereby the subscribers (1-4) record the instant ($t_A'$) of their last activation [and the instant of their recent activation ($t_A$)] and determine an actual cycle time (T) from the difference between these instants ($t_A'$, $t_A$),
   - whereby the subscribers (1-4) determine a maximum permitted activation time ($T_A$) from the difference between the desired cycle time ($T^*$) and the actual cycle time (T),

   characterized in that

   - a correction value for the desired cycle time ($T^*$) is determined from the maximum permitted activation time ($T_A$),
   - to determine the correction value a mean value ($\overline{T_A}$) is formed from the maximum permitted activation times ($T_A$) of several cycles, and
   - the subscribers (1-4) determine the correction value automatically and determine a new desired cycle time ($T^*_{new}$) from the sum of the correction value and the desired cycle time ($T^*$).

2. Communication method according to claim 1, characterized in that

   - the maximum permitted activation time ($T_A$) or its mean value ($\overline{T_A}$) is output by the subscribers (1-4), and
   - the correction value or a new desired cycle time ($T^*_{new}$) is specified by the user of the communication system.

3. Communication method according to claim 1 or 2, characterized in that a lower and an upper limit for the maximum permitted activation time ($T_A$) or its mean value ($\overline{T_A}$) is specified for the subscribers (1-4) and in that the correction value has the value zero if the maximum permitted activation time ($T_A$) or its mean value ($\overline{T_A}$) lies between the lower and the upper limit.

4. Communication method according to claim 1, 2 or 3, characterized in that a maximum desired cycle time ($T^*_{max}$) is specified for the subscribers (1-4) and the new desired cycle time ($T^*_{new}$), upon an exceeding of the maximum desired cycle time ($T^*_{max}$), is limited to the value of the maximum desired cycle time ($T^*_{max}$).

5. Communication method according to one of the above claims, characterized in that it is used with a token ring.

## Revendications

1. Procédé de communication pour un système de communication constitué de plusieurs abonnés (1 à 4) raccordés à une ligne de communication (5), dans lequel :

   - on rend les abonnés (1 à 4) actifs de façon cyclique,
   - il n'y a toujours qu'un seul abonné actif (par exemple 2) à quelqu'instant que ce soit,
   - l'abonné momentanément actif (2) transmet un signal d'activation au prochain abonné (3) à rendre actif afin de le rendre actif et cesse soi-même d'être actif lorsqu'il reçoit de l'abonné (3) à rendre actif l'accusé de réception du signal d'activation,
   - on mémorise dans les abonnés (1 à 4) un temps de cycle de consigne ($T^*$) dans les limites duquel les abonnés (1 à 4) doivent être rendus actifs au moins une fois,
   - les abonnés (1 à 4) détectent l'instant ($t_A'$) de leur dernière activation et l'instant ($t_A$) de leur nouvelle activation et déterminent à partir de la différence de ces instants ($t_A'$, tA) un temps de cycle réel (T),
   - les abonnés (1 à 4) déterminent à partir de la différence du temps de cycle de consigne ($T^*$) et du temps de cycle réel (T) un temps d'activation maximal autorisé ($T_A$),

caractérisé par le fait que

- l'on détermine à partir du temps d'activation maximal autorisé ($T_A$) une valeur de correction pour le temps de cycle de consigne ($T^*$),
- pour déterminer la valeur de correction, on forme une valeur moyenne ($\overline{T_A}$) à partir des temps d'activation maximaux autorisés ($T_A$) de plusieurs cycles, et que
- les abonnés (1 à 4) déterminent automatiquement la valeur de correction et déterminent un nouveau temps de cycle de consigne ($T^*_{neu}$) à partir de la somme de la valeur de correction et du temps de cycle de consigne ($T^*$).

2. Procédé de communication selon la revendication 1, caractérisé par le fait que

- les abonnés (1 à 4) délivrent en sortie le temps d'activation maximal autorisé ($T_A$) ou sa valeur moyenne ($\overline{T_A}$) et
- l'utilisateur du système de communication prescrit la valeur de correction ou un nouveau temps de cycle de consigne ($T^*_{neu}$).

3. Procédé de communication selon la revendication 1 ou 2, caractérisé par le fait que l'on prescrit aux abonnés (1 à 4) une limite inférieure et une limite supérieure pour le temps d'activation maximal autorisé ($T_A$) ou pour sa valeur moyenne ($\overline{T_A}$) et que la valeur de correction a la valeur zéro si le temps d'activation maximal autorisé ($T_A$) ou sa valeur moyenne ($\overline{T_A}$) se trouve entre la limite inférieure et la limite supérieure.

4. Procédé de communication selon la revendication 1, 2 ou 3, caractérisé par le fait que l'on prescrit aux abonnés (1 à 4) un temps de cycle de consigne maximal ($T^*_{max}$) et que, lorsque le nouveau temps de cycle de consigne ($T^*_{neu}$) est supérieur au temps de cycle de consigne maximal ($T^*_{max}$), le nouveau temps de cycle de consigne ($T^*_{neu}$) est limité à la valeur du temps de cycle de consigne maximal ($T^*_{max}$).

5. Procédé de communication selon l'une des revendications précédentes, caractérisé par le fait qu'il est utilisé dans un anneau à jeton.